# EUROPEAN PATENT SPECIFICATION

(11) **EP 2 724 603 B1**
(45) Date of publication and mention of the grant of the patent: **25.05.2016**
(21) Application number: 12189884.5
(22) Date of filing: 25.10.2012
(51) Int. Cl.: A01D 34/74

(54) **Improvements in or relating to lawn-care apparatus.**
Verbesserungen an oder im Zusammenhang mit Rasenpflegevorrichtungen
Améliorations de/ou associées à un appareil d'entretien de jardin

(43) Date of publication of application: 30.04.2014
(73) Proprietor: ROBERT BOSCH GMBH, 70442 Stuttgart (DE)
(72) Inventor: Armstrong, Gavin, Ben, Elmswell, Suffork Elmswell Suffork IP30 9GH (GB)

(56) References cited:
- EP-A1- 0 459 638
- US-A- 2 986 402
- US-A- 4 905 463
- US-A1- 2009 183 481

## Description

The present invention relates to improvements in, or relating to, lawn-care apparatus. In particular, it relates to an improved spring unit for providing a biasing force against the weight of the lawn-care apparatus when adjusting the operating height of the apparatus.

Typically, a lawn-care apparatus, such as a lawnmower or scarifier, has four wheels, or two front wheels and a rear roller. In order to change the operating height, hereby referred to as the 'height-of-cut', of the lawn-care apparatus a 'single point' operation may be implemented.

A 'single point' operation provides cranked axles linked together via a sprung link arm coupled with a detent arrangement allowing the movement and locking of all four lawnmower wheels into pre-determined positions, and therefore pre-determined heights of cut. The user only has to operate a single lever, or other actuator, to move and lock all wheels to the desired position. Alternatively, the cranked axles can also be arranged to move the front and rear axles independently.

It is known in the art to incorporate springs within the single point height-of-cut adjustment system to assist the end user in lifting the lawn-care apparatus from a lower to a higher height-of-cut position, and also to prevent the weight of the lawn-care apparatus dropping too quickly when lowering the lawn-care apparatus from a higher to a lower height-of-cut position.

For example, US2009183481 discloses a lawn-care apparatus with a height of cut system comprising a pair of parallel cross shafts that carry a plurality of pivotal suspension linkages that connect to the deck of the apparatus. The cross shafts and linkages pivot jointly with one another and with a pivotal control lever. One of the cross shafts carries a torsion spring to counterbalance the weight of the deck. The control lever is maintained in a plurality of adjusted pivotal positions by a height selection bracket fixed to the frame with the height selection bracket being capable of having its position changed or adjusted relative to the frame by a single adjustment bolt.

However, the spring systems presently employed in the art suffer from a range of defects which the present invention seeks to address.

The springs often take up a large amount of space due to their construction. The problem is exacerbated when the springs used utilise a low spring rate (or spring constant, in line with Hooke's law) which are generally bigger in size. Springs with low spring rates provide an almost constant support load no matter which height-of-cut position the lawn-care apparatus is set to, and are thus preferred in such apparatus but take up more room.

The springs are also often incorporated into the lawn-care apparatus on the production line and demand a large installed deflection in order to support the weight of the apparatus, which requires additional time and effort to complete, and therefore additional expense.

The springs employed are often exposed to dirt and grass which may reduce the efficiency of the height-of-cut assembly.

The present invention therefore seeks to overcome these problems by providing an improved spring unit for use in lawn-care apparatus.

In its broadest sense, the present invention provides a spring unit according to claim 1, having a torsion spring to bias against a weight of a lawn-care apparatus when adjusting the working height of the apparatus. An enclosure for the torsion spring provides extra protection to prolong the life of the spring. It also allows the spring component to be assembled and pre-loaded by a third party. This is advantageous in terms of component supply and apparatus assembly. One end of the spring is anchored to the spring unit enclosure, whilst the remaining end of the spring is engaged with a chassis of a lawn-care apparatus to allow loading of the spring as the height-of-cut of the lawn-care apparatus is adjusted. The body of the spring is accommodated within an annular channel in the spring unit enclosure to locate the spring securely within the housing, and an arm section is provided to secure one end of the spring.

Preferably, the enclosure housing comprises a first section and a second section for easy insertion of the spring and assembly of the spring unit.

Preferably, the annular channel has a depth less than the height of the spring to allow the one end of the spring to extend out from the spring unit and engage with the chassis whilst protection the rest of the spring.

Preferably, the second section of the spring unit comprises a flat disc surface and inner engagement arms to secure the second section to the first section through the annular channel, and securing the spring between the two.

In a further embodiment, the invention may be incorporated into a lawn-care apparatus. Preferably, the lawn-care apparatus comprises both front and rear cranked axles to adjust its working height, thus allowing both left and right side wheels to be adjusted simultaneously. Preferably, the lawn-care apparatus has a link arm between the front and rear cranked axles to allow for a single point height-of-cut system to be implemented. Preferably, the spring unit engages the crank arm of the cranked axle allowing the rotation of the spring unit to be transferred to the rotation of the cranked axle. Preferably the cranked axle engagement is located within the diameter of the annular channel of the spring unit and the cranked axle passes through the spring unit.

Preferably, the spring is pre-loaded with a tension prior to assembly with the lawn-care apparatus thus making the assembly more efficient.

The above and other aspects of the present invention will now be described in further detail, by way of example only, with reference to the accompanying drawings, in which:
Figure 1 is a front left side exploded perspective view of a chassis of an embodiment of a lawn-care apparatus in accordance with the present invention comprising a single point height-of-cut adjustment system.
Figure 2 is an exploded view of the three principal components of the spring unit of the height-of-cut system of Figure 1, including a first section, a coiled torsion spring and a second section.
Figure 3 shows both a top-down and bottom-up view of the first section as seen in Figure 2, without the coiled torsion spring or second section.
Figure 4 displays both a top-down and bottom-up view of the completed spring unit incorporating a first section, a second section and a coiled torsion spring assembled together as a single unit.
Figure 5 is a detailed view of the hook at one end of the coiled torsion spring of an embodiment of a spring unit of the present invention.
Figure 6 shows two side-on views of the spring unit of Figure 4 engaged with a cranked axle used in a single point height-of-cut adjustment system.
Figure 7 shows engagement of a cranked axle end with the spring unit of Figure 4.

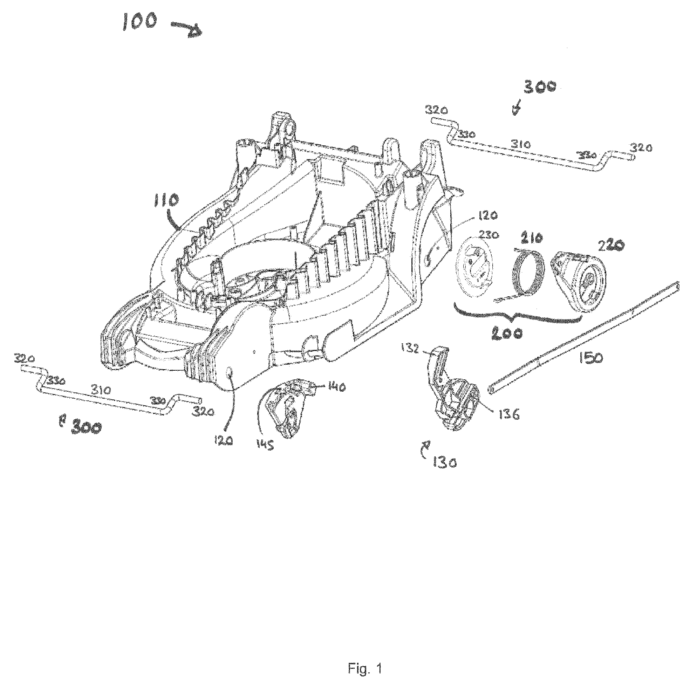

Figure 1 shows a lawnmower chassis (110) equipped with a single point height-of-cut adjustment system which allows the relative height of each of the wheels (not shown) to be adjusted simultaneously with respect to the chassis (110) using a single point mechanism. This is achieved by using cranked axles (300) between the two front wheels and between the two rear wheels so that rotation of the axles (300) causes the relative height of the wheels to the chassis (110) to rise or fall accordingly.

A cranked axle (300) is an axle comprising an inner section (310) and an outer section (320) at each end of the cranked axle. The outer sections (320) of the cranked axis are parallel to, but not axially aligned with, the inner section (310) of the cranked axle. Both outer sections (320) of the cranked axle (300) are aligned and parallel with each other. The inner section (310) is connected to each of the outer sections (320) via an angled crank arm (330) section. Whilst the crank arm (330) is typically at right angles to both the parallel inner section (310) and outer section (320) of the cranked axle, it may be at any angle which is not parallel to the inner section (310) and outer section (320).

The cranked axles (300) are secured in apertures (120) in the lawnmower chassis (110) and supported by the inner section (310) of the cranked axle. The inner section (310) is free to rotate within the chassis (110), and the outer sections (320) trace a circular arc centred on the inner section (310) at a distance away from the inner section (310) defined by the length of the crank arm (330) section.

The wheels of the lawnmower are engaged with, and free to rotate about, the outer section (320) of the cranked axle (300), in a conventional manner.

The single point height-of-cut adjustment system is operated by using a lever (132) and detent (145) arrangement conveniently positioned near at least one of the wheels.

As seen in Figure 1, the lawn-care apparatus (100) comprises a raised crest section (140) comprising several spaced-apart detents (145) cut into it. These detents (145) correspond to fixed height-of-cut positions for the height-of-cut system. The detents (145) are for engagement with a lever (132) and to ensure that the cranked axle (300) is held in position once the desired height-of-cut has been chosen.

The adjustment system further comprises a lever section (130). The lever section (130) is shaped so as to engage the detents (145) of the raised crest section (140). The handle (132) is rotatable around the rotational axis of the inner section (310) of the cranked axle, and comprises a channel to engage with the crank arm (330) of the cranked axle (300), adjacent and perpendicular to a through-hole (136) which engages with an outer section (320) of the cranked axle, the through-hole suitably displaced from the rotational axis of the inner cranked axle (300). Therefore the lever section (130) engages with the crank arm (330) and outer section (320) of the cranked axle (300) to provide a means of rotating the cranked axle (300) about the axis of the inner section (310).

In order to adjust the height-of-cut system, the lever (132) is pulled away from and out of engagement with the detents (145). The lever section (130) is thus free to move about the rotational axis of the cranked axle (300), i.e. the inner section (310).

As the lever section (130) is rotated, the cranked axle (300) is rotated since the outer section (320) and crank arm (330) are engaged with the rotationally-offset through-bore (136) and perpendicular channel respectively. Once the cranked axle (300) has been rotated into the preferred position, the lever (132) may be placed into the nearest corresponding detent (145). The cranked axle (300) is thus held in position until the height-of-cut is adjusted again. Any number of detent positions (145) can be accommodated, if desired, in order to provide multiple height-of-cut positions. The outer sections (320) of the cranked axle (300) describe an arc around the rotational axis of the inner section (310) of the cranked axle. With the wheels and outer section (320) of the cranked axle (300) at a high position with respect to lawnmower chassis (110), the lawnmower chassis (110) is held closer to the ground during operation. This results in a lower height-of-cut for the lawnmower and therefore shorter grass.

With the wheels and outer section (320) of the cranked axle (300) held in a lower position with respect to the chassis (110) of the lawnmower, the chassis (110) is held further off the ground. This results in a greater height-of-cut and longer grass after cutting.

Therefore, by rotating the cranked axle (300), the height-of-cut of the lawnmower can be adjusted.

The front and rear cranked axles (300) are connected via a link arm (150), and thus the front and rear wheels are also adjusted simultaneously.

It is possible to adjust the height-of-cut setting for each of the four wheels of the apparatus simultaneously by operating only one lever (132) safely and easily. Furthermore, each of the wheels is moved synchronously with the others, therefore ensuring an even and level height-of-cut. Since the cranked axle (300) extends through the entire width of the lawnmower chassis (110), and the outer sections (320) are aligned with each other, the left and right wheels on the axles (300) are held at the relative same height to each other. That is to say, it is not possible to adjust the height of either the left or the right wheel independently if they are attached to the same axle, therefore ensuring a level height-of-cut.

The link arm (150) attaches to, and is engaged with, the lever section (130) at one end, and the spring unit (200) at the other.

The apparatus is supplied with a spring unit (200) to provide a bias force in order to make adjusting height-of-cut of the lawnmower (100) easier. The lawnmower (100) is thus sprung so that lowering the lawnmower chassis (110) with gravity requires work to be done to load the spring (210). Therefore the stored tension within the spring (210) when the lawnmower chassis (110) is at a lower height-of-cut position, may be released and used to assist raising the lawnmower chassis (110) against gravity, to a higher height-of-cut position. This also ensures that when lowering the lawnmower chassis (110) to a lower height-of-cut position, the weight of the lawnmower (100) does not allow the chassis (110) to simply to fall under gravity, or force cranked axle (300) into the lower position with speed fast enough to cause damage to the apparatus (100) or injury to the end user.

Ideally the load supplied by the spring should counterbalance exactly the weight of the lawn-care apparatus (100), and should vary by as small an amount as possible as the height-of-cut is varied. This implies a spring with a soft or low spring rate, in accordance with Hooke's Law, but this in turn implies that a large installation deflection has been necessary to achieve the necessary preload (tension) to support the static weight of the apparatus (100). Such large preload installation deflections are inconvenient to apply at the point of apparatus assembly and consume large amounts of space.

Different types of spring may be used in order to counter the lawn-care apparatus (100) weight when adjusting the height-of-cut position. The spring unit (200) of the present invention uses a torsion spring (210), and in particular a helical torsion spring. The spring is comprised of a metal rod or wire shaped into a helix, or coil, with both ends (212, 214) of the coiled spring extending away a short distance from the coil in a straight line to enable the spring to be 'loaded' by twisting the ends of the wire about the longitudinal axis of the coil about which the wire is wound. The spring works by storing the sideways bending forces of the coiled wire either towards or apart from each other, twisting the coil tighter or lighter respectively. Whilst the spring is referred to as a torsion spring, it is pertinent to note that the wire is bent about the axis defined by the coil, and not twisted about its own longitudinal axis since it is in the form of a helical spring.

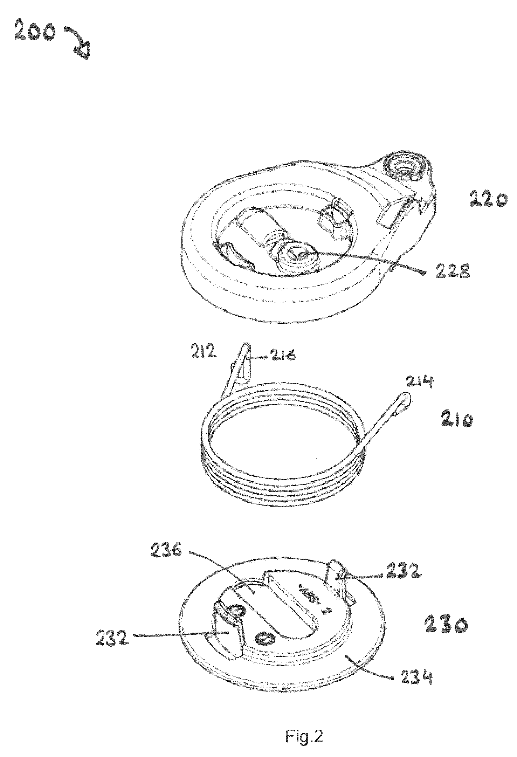

As shown in Figure 2, the spring unit (200) comprises three parts, a first section (220), a coiled torsion spring (210), and a second section (230). Preferably both the first (220) and second section (230) are made of a polymer to provide protection to the torsion spring (210) against dirt or grass ingression.

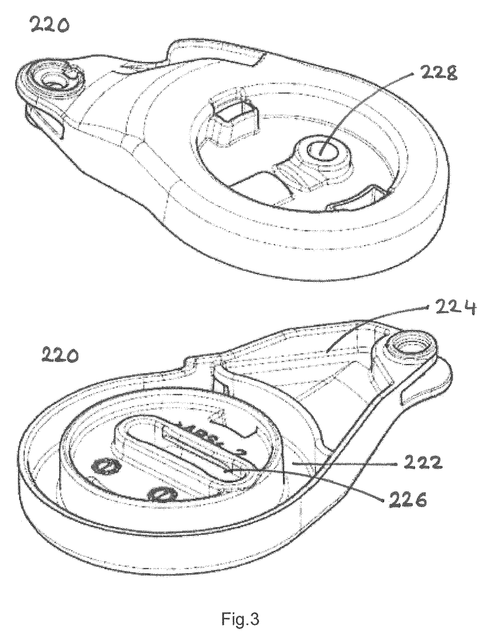

Figure 3 shows a detailed view of the first section (220) from above and from below. The first section (220) comprises an annular channel (222) for receiving the main body of the coiled torsion spring (210), and an arm section (224) for accommodating one end (214) of the coiled torsion spring (210), and for attachment to the link arm (150) of the single point height-of-cut adjustment system. The arm section (224) secures one end (214) of the coiled torsion spring (210), so that rotation of the spring unit (200) will necessarily result in rotation of the second end (212) of the torsion spring (210) with the first (220) and second section (230).

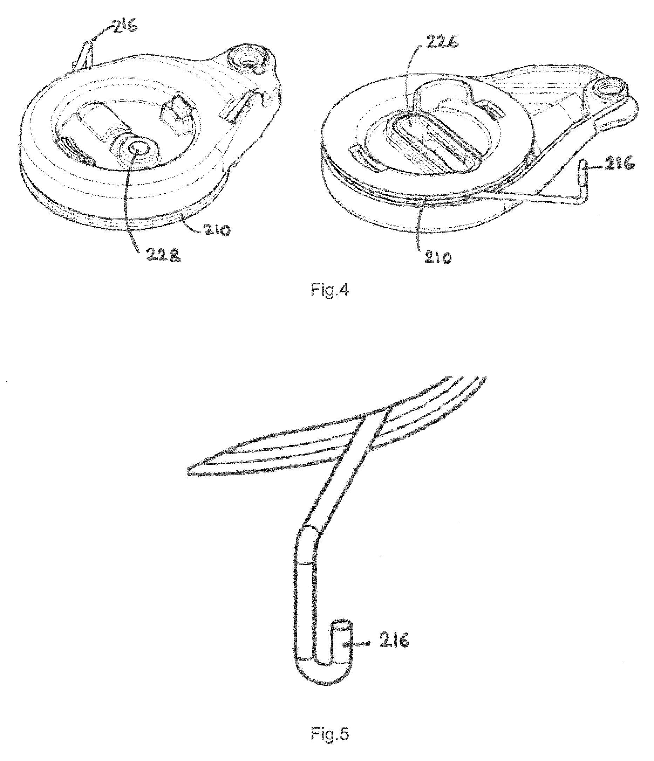

The depth of the annular channel (222) for containing the main body of the coiled torsion spring (210) is less than the height of the main body of the coiled torsion spring (210). When the coiled torsion spring (210) is sat within the annular channel (222) of the first section (220), and one end (214) is secured within the securing area (224) of the first section (220), owing to the lesser depth of the annular channel (222), the top of the helical torsion spring (210) will sit above the edge of the first section (220). This can be seen clearly in Figure 4, where the loose end (212) of the coiled torsion spring (210), i.e. that which is not secured within the arm section (224) of the first section (220), extends outwardly away from the spring unit (200) owing to the coiled spring body being taller than the depth of the annular channel (222) of the first section (220). This allows the loose end (212) of the coiled torsion spring (210) to engage with a fixed point on the chassis (110) of the lawn-care apparatus (100), thus providing an anchor to enable loading of the coiled torsion spring (210) as the single point height-of-cut adjustment system is activated to lower the height of the lawn-care apparatus (100) chassis (110), or unloading of the spring (210) as the lawn-care apparatus (100) is raised.

The second section (230) of the spring unit (200) is adapted to engage with the first section (220) of the spring unit (200) and secure the coiled torsion spring (210) within the first section (220) of the spring unit (200) without restricting movement of the loose end (212) which is anchored to the chassis (110) of the lawn-care apparatus (100).

The second section (230) is formed of at least one central engagement arm (232) whose length corresponds to the height of the coiled torsion spring (210), the arm (232) extending away from a flat disc section (234) corresponding to the size of the coiled torsion spring (210) profile. The central engagement arms (232) extend through the middle of the coiled torsion spring (210) and attach to corresponding engagement points found within the annular channel (222) of the first section (220). The flat disc section (234) secures the coiled torsion spring (210) within the annular channel (222) of the first section (220) whilst maintaining a gap around the top side of the coiled torsion spring (210) to provide lateral free movement for the extending arm (212) engaged with the chassis (110) of the lawn-care apparatus (100).

As can be seen in Figure 4, the completed spring unit (200) comprising the coiled torsion spring (210) secured within the first section (220) by the second section (230), allows the first end (214) of the coiled torsion spring (210) to be secured within the first section (220), and the remaining end (212) of the coiled torsion spring (210) to extend away from the spring unit (200) to engage with the chassis (110) of the lawn-care apparatus (100). Therefore as the spring unit (200) is rotated during activation of the single point height-of-cut adjustment system, the first secured end (214) of the coiled torsion spring (210) will be rotated as the lever (132) activates the link arm (150), whilst the second remaining end (212) of the coiled torsion spring (210) secured to the lawn-care apparatus (100) chassis (110) is anchored so that the coiled torsion spring (210) is twisted and energy is imparted into it as the chassis (110) of the lawn-care apparatus (100) is lowered, and energy is released from the coiled spring (210) as the chassis (110) of the lawn-care apparatus (100) is raised.

The assembled spring unit (200) effectively encloses all of the coiled torsion spring (210) whilst allowing the remaining end (212) of the coiled torsion spring (210) to extend away from the spring unit (200) for engagement with the chassis (110) of the lawn-care apparatus (100).

Combining the features of the spring unit (200) as described above allows the spring unit (200) to be constructed as a sub-assembly part by third party manufacturers and suppliers to manufacture and supply a completed spring unit (200) to the main assembly line of the lawn-care apparatus (100). This saves time in the overall manufacture of the lawn-care apparatus (100).

Preferably, the coiled torsion spring (210) is pre-loaded when assembled into the spring unit (200) section. The spring (210) is retained in this preloaded state by a suitable tab or other feature on either of the spring upper or lower casings (not shown). When the spring unit (200) is engaged with the link arm (150) of the single point height-of-cut adjustment system and the extending arm (212) of the torsion spring (210) is anchored to the chassis (110) the spring (210) is deflected beyond its preloaded position such that its installed load is able to directly support the weight of the apparatus (100). This also helps reduced overall assembly time for the spring unit (200) of the invention while providing for a low spring rate with minimal variation in counterbalance load as the height of cut is varied. The use of a torsion spring (210) contributes to an exceptionally compact installation.

Regarding Figure 5 of the drawings, the end (212) of the coiled torsion spring (210) which extends away from the spring unit (200) for engagement with the chassis (110) of the lawn-care apparatus (100) is formed into a hook (216) for engagement/anchoring with the chassis (110). The hooked ends (216) of the anchored end (212) of the coiled torsion spring (210) are formed in a soft curve to provide a safe design for the assembly of the spring unit (200).

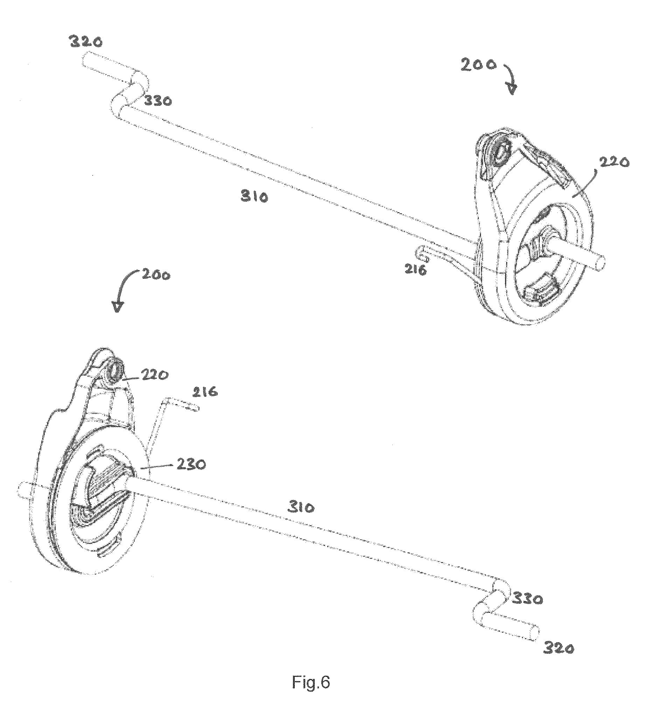

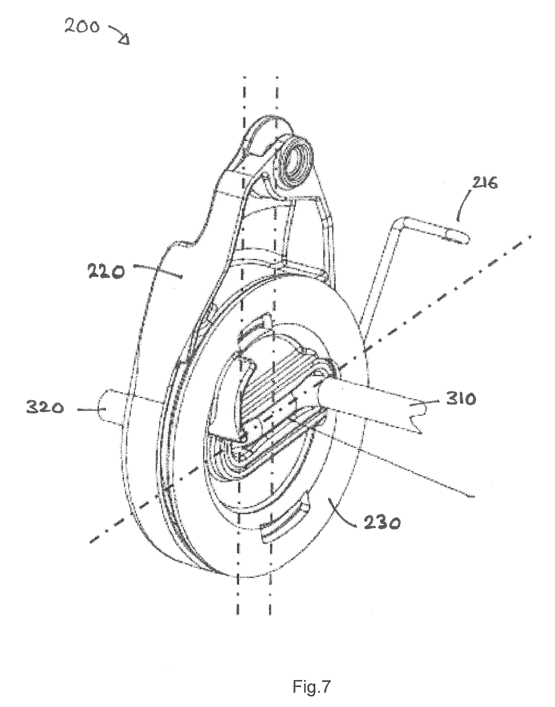

As can be seen in Figures 6 and 7, the spring unit (200) is designed to engage with an end of a cranked axle (300) where the inner section (310) is joined to the outer section (320) via the crank arm (330), allowing the turning force initiated by the end-user activating the height-of-cut lever (132) to be transferred to the wheels via the link arm (150) and the spring unit (200). The diameter of the coiled torsion spring (210) and annular channel (222) is greater than the length of the crank arm (330) thus allowing the cranked axle (300) to engage with the spring unit (200) within the diameter of the annular channel (222). The spring unit (200) engages with the crank arm (330) section of the cranked axle (300) via a channel (226) inside the annular channel (222).

Figure 7 shows a close-up view of the completed spring unit (200) engaged with a cranked axle (300). The extending arm (212) can be seen reaching away from the main body for engagement with the chassis (110). As the cranked axle (300) rotates about its inner axis, the outer section (320) describes an arc. The wheels of the lawn-care apparatus (100) are engaged with the outer section(s) (320) of the cranked axle (300), and rotate about this outer axis.

The first (220) and second sections (230) of the spring unit (200) also comprise an aperture (228, 236) through which the outer section (320) of a cranked axle (300) may pass. Therefore, the spring unit (200) is engaged with the crank arm (330) of the cranked axle, and the outer section (320) is free to pass from the inner, to the outer side of the spring unit (200), through the aperture (228, 236) in the first (220) and second (230) sections, and the centre of the coiled torsion spring (210). The outer section (320) of the cranked axle (300) may then be engaged with a wheel.

Whilst the present invention is described by way of the example above, certain alternatives can be envisioned by the skilled person to be covered by the invention within the scope of the appended claims.

For instance, the housing may be open-sided, enclosing the spring (210) on one side only.

## Claims

1. A spring unit (200) for a lawn-care apparatus (100);
the spring unit (200) being adapted to bias against a weight of the apparatus when adjusting a working height of the apparatus, the spring unit (200) comprising;
a coiled torsion spring (210), and
a housing, substantially enclosing the spring (210) so as to protect it from dust or grass ingress during operation of the lawn-care apparatus (100), **characterised in that** the housing comprises;
an annular channel (222) to accommodate the body of the spring (210), and
an arm section (224) to secure one end (214) of the spring (210), wherein
the first end (214) of the spring is anchored to the arm section (224) of the spring unit housing, whilst the second end (212) of the spring is engaged with a chassis (110) of a lawn-care apparatus (100).

2. The spring unit (200) according to claim 1 wherein the annular channel (222) has a depth less than the height of the spring (210) allowing the second end (212) of the spring to extend out from the spring unit (200).

3. The spring unit (200) according to claim 1 or claim 2 wherein the housing comprises a first section (220) and a second section (230), and the spring (210) is positioned between the two.

4. The spring unit (200) according to claim 3 wherein
the first section (220) of the spring unit housing comprises the annular channel (222) and arm section (224), and
the second section (230) of the spring unit housing comprises a flat disc surface (234), and inner engagement arms (232) extending away from the flat disc surface (234), wherein
the inner engagement arms (232) secure the second section (230) to the first section (220) through the centre of the annular channel (222) of the first section (220).

5. A lawn-care apparatus (100) incorporating the spring unit (200) according to any one of the preceding claims.

6. The lawn-care apparatus (100) according to claim 5 further comprising front and rear cranked axles (300) to adjust the working height of the lawn-care apparatus (100).

7. The lawn-care apparatus (100) according to claim 6 further comprising a link arm (150) between front and rear cranked axles (300) and engaged with the spring unit (200) to adjust the working height of apparatus.

8. The lawn-care apparatus (100) according to claim 6 or claim 7 wherein the spring unit (200) engages a crank arm (330) of the cranked axle (300).

9. The lawn-care apparatus (100) according to claim 8 wherein the crank arm (330) of the cranked axle (300) engagement is located within the diameter of the annular channel (222).

10. The lawn-care apparatus (100) according to any one of claims 6 to 9 wherein the spring unit (200) further comprises an aperture (228, 236) through which the outer section (310) of a cranked axle (300) passes.

11. The lawn-care apparatus (100) according to any one of claims 5 to 10 wherein the spring (210) is pre-loaded with a tension prior to assembly with the lawn-care apparatus (100).

12. The lawn-care apparatus (100) of any one of claims 5 to 11 wherein the apparatus is a lawnmower.

## Patentansprüche

1. Federeinheit (200) für eine Rasenpflegevorrichtung (100);
wobei die Federeinheit (200) dazu ausgeführt ist, gegen ein Gewicht der Vorrichtung vorzubelasten, wenn eine Arbeitshöhe der Vorrichtung eingestellt wird, wobei die Federeinheit (200) Folgendes umfasst:
eine gewundene Drehfeder (210), und
ein Gehäuse, das die Feder (210) im Wesentlichen umgibt, um sie vor dem Eindringen von Staub oder Gras während des Betriebs der Rasenpflegevorrichtung (100) zu schützen, **dadurch gekennzeichnet, dass** das Gehäuse Folgendes umfasst:
einen Ringkanal (222) zur Aufnahme des Körpers der Feder (210), und
einen Armbereich (224) zum Sichern eines Endes (214) der Feder (210), wobei
das erste Ende (214) der Feder am Armbereich (224) des Federeinheitsgehäuses verankert ist, während das zweite Ende (212) der Feder mit einem Chassis (110) einer Rasenpflegevorrichtung (100) in Eingriff steht.

2. Federeinheit (200) nach Anspruch 1, wobei der Ringkanal (222) eine Tiefe aufweist, die unter der Höhe der Feder (210) liegt, wodurch gestattet wird, dass sich das zweite Ende (212) der Feder aus der Federeinheit (200) heraus erstreckt.

3. Federeinheit (200) nach Anspruch 1 oder Anspruch 2, wobei das Gehäuse einen ersten Bereich (220) und einen zweiten Bereich (230) umfasst und die Feder (210) zwischen den beiden positioniert ist.

4. Federeinheit (200) nach Anspruch 3, wobei der erste Bereich (220) des Federeinheitsgehäuses den Ringkanal (222) und den Armbereich (224) umfasst, und
der zweite Bereich (230) des Federeinheitsgehäuses eine flache Scheibenfläche (234) und innere Eingriffsarme (232), die sich von der flachen Scheibenfläche (234) weg erstrecken, umfasst,
wobei
die inneren Eingriffsarme (232) den zweiten Bereich (230) durch die Mitte des Ringkanals (222) des ersten Bereichs (220) am ersten Bereich (220) sichern.

5. Rasenpflegevorrichtung (100), die die Federeinheit (200) gemäß einem der vorhergehenden Ansprüche enthält.

6. Rasenpflegevorrichtung (100) nach Anspruch 5, die ferner eine vordere und eine hintere Kurbelachse (300) zum Einstellen der Arbeitshöhe der Rasenpflegevorrichtung (100) umfasst.

7. Rasenpflegevorrichtung (100) nach Anspruch 6, die ferner einen Verbindungsarm (150) zwischen der vorderen und der hinteren Kurbelachse (300), der zum Einstellen der Arbeitshöhe der Vorrichtung mit der Federeinheit (200) in Eingriff steht, umfasst.

8. Rasenpflegevorrichtung (100) nach Anspruch 6 oder Anspruch 7, wobei die Federeinheit (200) einen Kurbelarm (330) der Kurbelachse (300) in Eingriff nimmt.

9. Rasenpflegevorrichtung (100) nach Anspruch 8,
wobei der Eingriff des Kurbelarms (330) der Kurbelachse (300) innerhalb des Durchmessers des Ringkanals (222) liegt.

10. Rasenpflegevorrichtung (100) nach einem der Ansprüche 6-9, wobei die Federeinheit (200) ferner eine Öffnung (228, 236) umfasst, durch die der äußere Bereich (310) einer Kurbelachse (300) verläuft.

11. Rasenpflegevorrichtung (100) nach einem der Ansprüche 5-10, wobei die Feder (210) vor dem Einbau in die Rasenpflegevorrichtung (100) mit einer Spannung vorgespannt wird.

12. Rasenpflegevorrichtung (100) nach einem der Ansprüche 5-11, wobei es sich bei der Vorrichtung um einen Rasenmäher handelt.

## Revendications

1. Unité de ressort (200) pour un appareil d'entretien de pelouse (100) ;
l'unité de ressort (200) étant prévue pour presser contre un poids de l'appareil lors de l'ajustement d'une hauteur de travail de l'appareil, l'unité de ressort (200) comprenant :
un ressort de torsion enroulé (210), et
un boîtier entourant substantiellement le ressort (210) de manière à le protéger contre la pénétration de poussière ou d'herbe pendant le fonctionnement de l'appareil d'entretien de pelouse (100), **caractérisé en ce que** le boîtier comprend :
un canal annulaire (222) pour recevoir le corps du ressort (210), et
une section de bras (224) pour fixer une extrémité (214) du ressort (210),
la première extrémité (214) du ressort étant ancrée à la section de bras (224) du boîtier de l'unité de ressort, tandis que la deuxième extrémité (212) du ressort est en prise avec un châssis (110) d'un appareil d'entretien de pelouse (100).

2. Unité de ressort (200) selon la revendication 1, dans laquelle le canal annulaire (222) présente une profondeur inférieure à la hauteur du ressort (210), ce qui permet à la deuxième extrémité (212) du ressort de s'étendre depuis l'unité de ressort (200).

3. Unité de ressort (200) selon la revendication 1 ou 2, dans laquelle le boîtier comprend une première section (220) et une deuxième section (230), et le ressort (210) est positionné entre les deux.

4. Unité de ressort (200) selon la revendication 3, dans laquelle
la première section (220) du boîtier de l'unité de ressort comprend le canal annulaire (222) et la section de bras (224), et
la deuxième section (230) du boîtier de l'unité de ressort comprend une surface de disque plate (234), et des bras d'engagement internes (232) s'étendant à l'écart de la surface de disque plate (234),
les bras d'engagement internes (232) fixant la deuxième section (230) à la première section (220) à travers le centre du canal annulaire (222) de la première section (220).

5. Appareil d'entretien de pelouse (100) incorporant l'unité de ressort (200) selon l'une quelconque des revendications précédentes.

6. Appareil d'entretien de pelouse (100) selon la revendication 5, comprenant en outre des essieux à manivelle avant et arrière (300) pour ajuster la hauteur de travail de l'appareil d'entretien de pelouse (100).

7. Appareil d'entretien de pelouse (100) selon la revendication 6, comprenant en outre un bras de liaison (150) entre les essieux à manivelle avant et arrière (300) et engagé avec l'unité de ressort (200) pour ajuster la hauteur de travail de l'appareil.

8. Appareil d'entretien de pelouse (100) selon la revendication 6 ou la revendication 7, dans lequel l'unité de ressort (200) s'engage avec un bras de manivelle (330) de l'essieu à manivelle (300).

9. Appareil d'entretien de pelouse (100) selon la revendication 8, dans lequel le bras à manivelle (330) de l'engagement avec l'essieu à manivelle (300) est situé à l'intérieur du diamètre du canal annulaire (222).

10. Appareil d'entretien de pelouse (100) selon l'une quelconque des revendications 6 à 9, dans lequel l'unité de ressort (200) comprend en outre une ouverture (228, 236) à travers laquelle passe la section extérieure (310) d'un essieu à manivelle (300).

11. Appareil d'entretien de pelouse (100) selon l'une quelconque des revendications 5 à 10, dans lequel le ressort (210) est précontraint avec une tension avant l'assemblage avec l'appareil d'entretien de pelouse (100).

12. Appareil d'entretien de pelouse (100) selon l'une quelconque des revendications 5 à 11, dans lequel l'appareil est une tondeuse à gazon.
